# EUROPEAN PATENT SPECIFICATION

(11) **EP 2 543 539 B1**
(45) Date of publication and mention of the grant of the patent: **22.04.2015**
(21) Application number: 11750438.1
(22) Date of filing: 01.02.2011
(51) Int. Cl.: B60N 2/00, B60N 2/58

(54) **SEATING SENSOR FOR VEHICLE SEAT AND METHOD FOR ATTACHING SAME**
SITZSENSOR FÜR FAHRZEUGSITZE UND VERFAHREN ZU SEINER ANBRINGUNG
CAPTEUR D'OCCUPATION POUR SIÈGE DE VÉHICULE ET PROCÉDÉ DE FIXATION DE CELUI-CI

(30) Priority: 04.03.2010 JP 2010047884
(43) Date of publication of application: 09.01.2013
(73) Proprietor: Aisin Seiki Kabushiki Kaisha, Aichi 448-8650 (JP)
(72) Inventor: TAKUMA Setsu, Kariya-shi Aichi 448-8650 (JP); NAKAYAMA Koichi, Kariya-shi Aichi 448-8650 (JP); KONDO Hiromi, Kariya-shi Aichi 448-0027 (JP); TANAKA Kazuya, Kariya-shi Aichi 448-0027 (JP); IZAWA Minoru, Toyota-shi Aichi 471-8571 (JP); KONDO Keiichi, Toyota-shi Aichi 471-8571 (JP); KANAYAMA Osamu, Toyota-shi Aichi 471-8571 (JP)
(74) Representative: Winter, Brandl, Fürniss, Hübner, Röss, Kaiser, Polte - Partnerschaft mbB
(86) International application number: PCT/JP2011/051987
(87) International publication number: WO 2011/108325

(56) References cited:
- JP-A- 6 039 160
- JP-A- 2002 065 396
- JP-A- 2002 211 297
- US-A- 4 695 091
- US-A1- 2009 146 470

## Description

### TECHNICAL FIELD

The present invention relates to a seating sensor for a vehicle seat that is attached to a cushion portion of a vehicle seat according to the preamble of claim 1, and to an attaching method for such a seating sensor according to the preamble of claim 10.

### BACKGROUND ART

A seating sensor for a vehicle seat according to the preamble of claim 1 is known from US 2009/146470 A1. Further, in vehicle seats, there is known one in which as described in JP2002-65396 A for example, a seating sensor is arranged in a seat cushion and in which the seating sensor detects a passenger sitting on the seat cushion and urges the passenger to fasten a seat belt by turning on a warning lamp.

The device described in JP2002-65396 A utilizes a concave groove that is for securing a skin covering the front side of a pad portion of the seat cushion, and is configured to arrange the seating sensor between the front side of the pad portion and the skin. That is, the device described in Patent Document 1 is configured to provide the concave groove with inclined portions that are more gentle than vertical wall portions of the concave groove, and to arrange wires extended from a detecting section of the seating sensor or from the seating sensor at the inclined portions, so that the detecting section and wires of the seating sensor are restrained from being disconnected to improve the durability of the vehicle seat with the seating sensor.

### SUMMARY OF THE INVENTION

### PROBLEMS TO BE SOLVED BY THE INVENTION

However, the seating sensor of this kind takes the form of a film with flexibility and flutters not to be fixable in shape. Therefore, attaching the seating sensor to a place that is soft like the cushion is troublesome, and the dispersion of the attaching position becomes larger. This gives rise to problems that the man-hour is increased in the attaching work and that the work cannot be done stably. Further, an anxiety also arises in that the seating sensor is bent at an acute angle in the process of the attaching work to the cushion to bring about the disconnection of the seating sensor.

The present invention has been made in order to solve the aforementioned problems, and an object thereof is to provide a seating sensor for a vehicle seat and an attaching structure therefor that enable the seating sensor to be easily attached to a cushion portion.

### MEASURES FOR SOLVING THE PROBLEMS

In order to solve the aforementioned problems, the feature of the invention according to Claim 1 resides in comprising a film-like main body with flexibility adapted to be laid, between a front side on a seating side of a pad member of a cushion portion of the vehicle seat partly with a concave portion formed to be depressed and a skin member attached to the pad member to cover the front side on the seating side, across the concave portion and having a plurality of detecting sections for detecting a passenger seating on the pad member in contact with the front side on the seating side of the pad member, an output section for outputting signals detected by the detecting sections, and a continuity section for transmitting the signals detected by the detecting sections to the output section; and a holding member configured to curve and hold a part of the continuity section constituting region of the film-like main body and to be able to be received together with the curved continuity section constituting region in the concave portion and having a pair of facing wall portions facing inside surfaces of the concave portion and a connection potion connecting respective one ends of the facing wall portions for covering a surface on at least one side of the curved continuity section constituting region by the facing wall portions and the connection portion. According to the invention, which is defined by the technical features of method steps set forth in claims 1 and 10, respectively, the pair of facing wall portions and the connection portion are configured to include an inside protection wall which curves and holds the continuity section constituting region while covering the surface on the skin member side of the continuity section constituting region, and an outside protection wall which curves and holds the continuity section constituting region while covering a surface on the pad member side of the continuity section constituting region. The holding member has a flexible connection portion which connects parts at one end in a width direction of the inside protection wall and the outside protection wall and which makes both of the inside and outside protection walls pivotable relatively about the connection portion.

The additional feature of the invention according to Claim 2 resides in that the pair of facing wall portions and the connection portion are constructed to include an inside protection wall which curves and holds the continuity section constituting region while covering a surface on the skin member side of the continuity section constituting region.

The additional feature of the invention according to Claim 3 resides in that the holding member has fixing pieces which are attachable to the inside protection wall with at least a part of the curved continuity section constituting region interposed therebetween.

The additional feature of the invention according to Claim 4 resides in that flexible connection portions are provided which connect parts at one end in a width direction of the inside protection wall and the fixing pieces and which make the fixing pieces to be pivotable about the connection portions relative to the inside protection wall.

The additional feature of the invention according to Claim 5 resides in that other ends of the facing wall portions constituting the outside protection wall are configured to protrude beyond other ends of the facing wall portions constituting the inside protection wall.

The additional feature of the invention according to Claim 6 resides in that at least either the facing wall portions or the connection portion is provided at opposite end portions in a width direction with restraining portions for restraining the continuity section constituting region from moving in the width direction.

The additional feature of the invention according to Claim 7 resides in that the inside protection wall and the outside protection wall are connected at one end in a width direction thereof to keep a gap which enables the continuity section constituting region to be inserted thereinto, between the inside protection wall and the outside protection wall.

The additional feature of the invention according to Claim 8 resides in that at least one of the inside protection wall and the outside protection wall is provided at the other end in the width direction with a coming-off restraining portion which restrains the continuity section constituting region having been inserted into the gap from coming off from the other end.

The additional feature of the invention according to Claim 9 resides in that the holding member is provided with extended portions which are extended from the other ends of the facing wall portions along the front side on the seating side of the pad member.

The invention as defined in Claim 10 resides in an attaching method for a seating sensor for a vehicle seat for attaching the seating sensor for a vehicle seat described in any one of Claims 1 through 9 to a cushion portion of the vehicle seat, wherein a portion forming the concave portion in the pad member is elastically deformed to enlarge a distance between inside surfaces of the concave portion, wherein the facing wall portions of the holding member or the curved continuity section constituting region of the film-like main body is held in sliding contact with the inside surfaces, and wherein the facing wall portions and the connection portion of the holding member and the curved continuity section constituting region are received and held in the concave portion.

The additional feature of the invention according to method Claim 11 resides in that the holding member is received in the concave portion to make the holding member or the curved continuity section constituting region contact a bottom surface of the concave portion.

### EFFECTS OF THE INVENTION

According to the invention of Claim 1 constructed as described above, the invention is provided with the film-like main body with flexibility adapted to be laid, between the front side on the seating side of the pad member of the cushion portion of the vehicle seat partly with the concave portion formed to be depressed and the skin member attached to the pad member to cover the front side on the seating side, across the concave portion and having the plurality of detecting sections for detecting the passenger seating on the pad member in contact with the front side on the seating side of the pad member, the output section for outputting the signals detected by the detecting sections, and the continuity section for transmitting the signals detected by the detecting sections to the output section; and the holding member configured to curve and hold the part of the continuity section constituting region of the film-like main body and to be able to be received together with the curved continuity section constituting region in the concave portion and having the pair of facing wall portions facing the inside surfaces of the concave portion and the connection potion connecting the respective one ends of the facing wall portions for covering the surface on the at least one side of the curved continuity section constituting region by the facing wall portions and the connection portion.

Thus, it is possible to obtain the seating sensor for a vehicle seat which is easily attachable to the cushion portion by only inserting the holding member in the concave portion of the pad member. In addition, it is attained to cover and protect the surface at least one side of the curved continuity section constituting region of the film-like main body by the facing wall portions and the connection portion of the holding member. According to the invention, the pair of facing wall portions and the connection portion are configured to include the inside protection wall which curves and holds the continuity section constituting region while covering the surface on the skin member side of the continuity section constituting region, and an outside protection wall which curves and holds the continuity section constituting region while covering the surface on the pad member side of the continuity section constituting region. Thus, it is possible to protect the surface on the skin member side and the surface on the pad member side of the continuity section constituting region, and even if the continuity section constituting region is in the positional relation to interfere with an engaging member provided in the pad member and an engageable fixing member provided on the skin member, it is possible to reliably avoid the situation that the continuity section constituting region is brought into contact with the engaging member and the engageable fixing member to be disconnected or damaged. According to the invention, the holding member has the flexible connection portion which connects the parts at the one end in the width direction of the inside protection wall and the outside protection wall and which makes the inside and outside protection walls pivotable relatively about the connection portion. Thus, by pivotally moving the inside protection wall about the flexible connection portion to receive the inside protection wall in the outside protection wall, it is possible to easily hold the continuity section constituting region between the inside protection wall and the [0022] outside protection wall.

According to the additional features of Claim 2, the pair of facing wall portions and the connection portion are constructed to include the inside protection wall which curves and holds the continuity section constituting region while covering the surface on the skin member side of the continuity section constituting region. Thus, the surface on the skin member side of the continuity section constituting region of the film-like main body can be protected by the inside protection wall of the holding member, and even if the continuity section constituting region is in a positional relation to interfere with an engageable fixing member of the skin member, it is attained to reliably avoid the situation that the continuity section constituting region is brought into contact with the engageable fixing member to be disconnected or damaged.

According to the additional features of Claim 3, the holding member has the fixing pieces which are attachable to the inside protection wall with at least the part of the curved continuity section constituting region interposed therebetween. Thus, only by attaching the fixing pieces to the inside protection wall, it is possible to easily hold the continuity section constituting region between the inside protection wall and the fixing pieces.

According to the additional features of Claim 4, the flexible connection portions are provided which connect the parts at one end in the width direction of the inside protection wall and the fixing pieces and which make the fixing pieces to be pivotable about the connection portions relative to the inside protection wall. Thus, by pivotally moving the fixing pieces about the flexible connection portions, it is attained to easily hold the continuity section constituting region between the inside protection wall and the fixing pieces.

According to the additional features of Claim 6, the other ends of the facing wall portions constituting the outside protection wall are configured to protrude beyond the other ends of the facing wall portions constituting the inside protection wall. Thus, even if the seating pressure causes the continuity section constituting region to loosen, the continuity section constituting region can be restrained from becoming larger in curvature to suppress the disconnection.

According to the additional features of Claim 6, since at least either the facing wall portions or the connection portion is provided at the opposite end portions in the width direction with the restraining portions for restraining the continuity section constituting region from moving in the width direction, the restraining portions can restrain the movement of the continuity section constituting region in the width direction.

According to the additional features of Claim 7, since the inside protection wall and the outside protection wall are connected at the one end in the width direction thereof to keep the gap which enables the continuity section constituting region to be inserted thereinto, between the inside protection wall and the outside protection wall, it is possible to hold the continuity section constituting region in the gap and to protect the surface on the skin member side and the surface on the pad member side of the continuity section constituting region by the inside protection wall and the outside protection wall.

According to the additional features of Claim 8, since at least one of the inside protection wall and the outside protection wall is provided at the other end in the width direction with the coming-off restraining portion which restrains the continuity section constituting region having been inserted into the gap from coming off from the other end, it is possible to prevent the continuity section constituting region from coming off from inside the gap at the time of a transfer of the holding member having the continuity section constituting region inserted into the gap.

According to the additional features of Claim 9, since the holding member is provided with the extended portions which are extended from the other ends of the facing wall portions along the front side on the seating side of the pad member, the both end portions of the continuity section constituting region held by the holding member attached in the concave portion of the pad member can be guided along the extended portions in mutually opposite directions orthogonal to the facing wall portions, so that it is possible to curve the both end portions of the continuity section constituting region without applying an excessive stress.

According to the invention as defined in Claim 10, in the attaching structure for the seating sensor for a vehicle seat for attaching the seating sensor for a vehicle seat described in any one of Claims 1 through 9 to the cushion portion of the vehicle seat, the portion forming the concave portion in the pad member is elastically deformed to enlarge the distance between inside surfaces of the concave portion; the facing wall portions of the holding member or the curved continuity section constituting region of the film-like main body is held in sliding contact with the inside surfaces; and the facing wall portions and the connection portion of the holding member and the curved continuity section constituting region are received and held in the concave portion.

Thus, the continuity section constituting region of the film-like main body can be held by the holding member with itself curved, and in the state, the holding member can be inserted into the concave portion of the pad member to be held therein, so that it is possible to easily attach the continuity section constituting region in the concave portion of the pad member.

According to the additional features of Claim 11, since the holding member is received in the concave portion to make the holding member or the curved continuity section constituting region contact the bottom surface of the concave portion, it is possible to easily hold the holding member and the continuity section constituting region held by the holding member at a predetermined position in the concave portion.

### BRIEF DESCRIPTION OF THE DRAWINGS

[Figure 1] is a perspective view showing the general construction of a vehicle seat with a seating sensor for a vehicle seat attached thereto.
[Figure 2] is a sectional view of a cushion portion, showing the seating sensor for a vehicle seat in an embodiment according to the present invention.
[Figure 3] is a plan view partly in section of the cushion portion of the vehicle seat as viewed in the direction of arrow 3 in Figure 2.
[Figure 4] is a perspective view showing a holding member adapted for the seating sensor.
[Figure 5] is a view showing the state that a film-like main body of the seating sensor is held by the holding member shown in Figure 4.
[Figure 6] is a sectional view of the cushion portion taken along the line 6-6 in Figure 3.
[Figure 7] is a perspective view showing a first modified form of the holding member.
[Figure 8] is a perspective view showing a second modified form of the holding member.
[Figure 9] is a view showing a third modified form of the holding member.
[Figure 10] shows a fourth modified form of the holding member, wherein (a) is a top view of the holding member and (b) is a front view thereof.
[Figure 11] shows a fifth modified form of the holding member, wherein (a) is a side view of the holding member and (b) is a front view thereof.
[Figure 12] is a perspective view showing a sixth modified form of the holding member.
[Figure 13] shows a seventh modified form of the holding member, wherein (a) is a perspective view of the holding member and (b) is a view as viewed in the A-direction in (a).
[Figure 14] shows an eighth modified form of the holding member, wherein (a) is a top view of the holding member and (b) is a front view thereof.
[Figure 15] shows a ninth modified form of the holding member, wherein (a) is a top view of the holding member and (b) is a front view thereof.
[Figure 16] is a perspective view showing a tenth modified form of the holding member.
[Figure 17] are explanatory views for explaining the operation where an outside protection wall is protruded beyond an inside protection wall.
[Figure 18] is a view showing the state that the film-like main body is held by the holding member in the tenth modified form.
[Figure 19] is a sectional view showing a seating sensor for a vehicle seat in another embodiment of the present invention.

### FORM FOR PRACTICING THE INVENTION

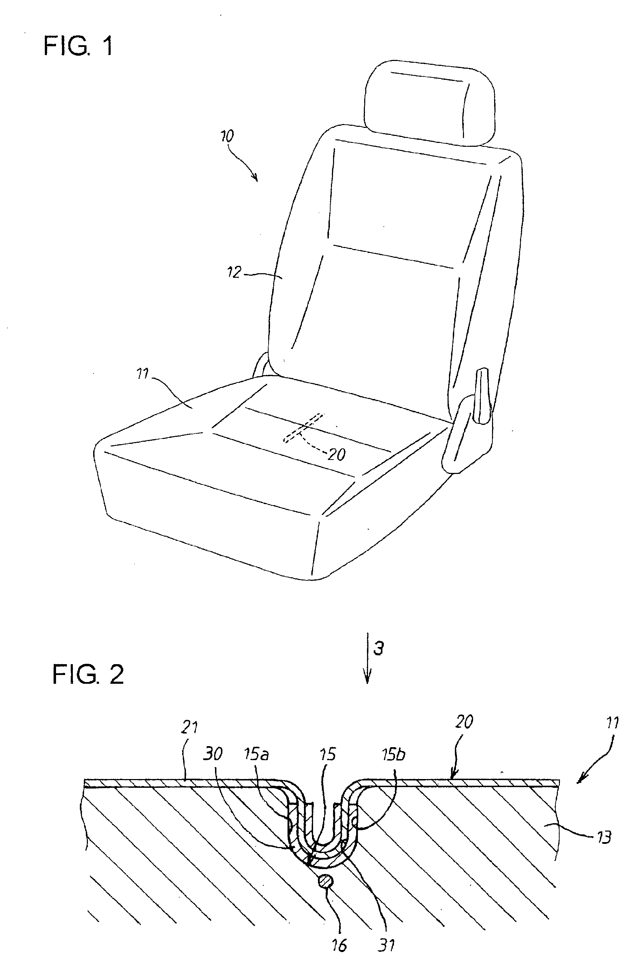

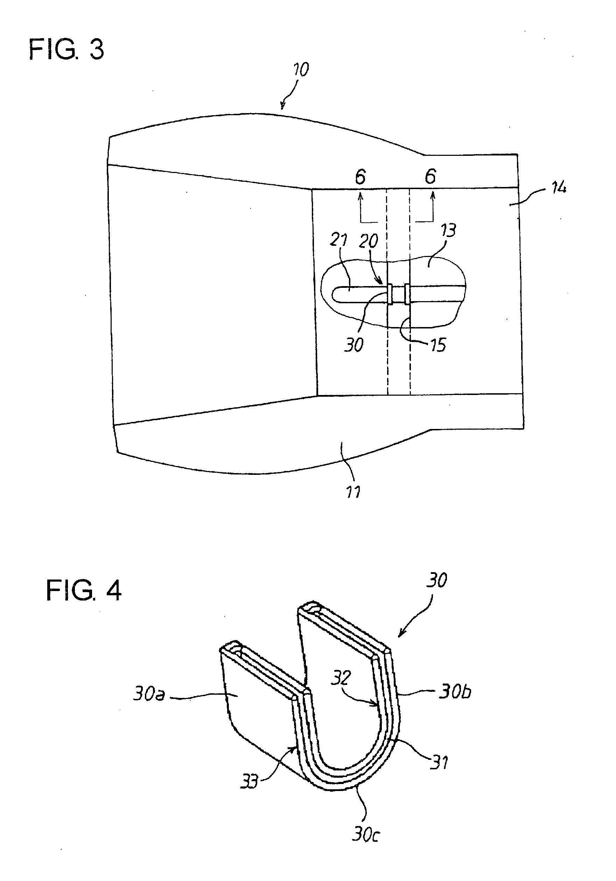

Hereinafter, embodiments of the present invention will be described with reference to the drawings. Figure 1 is a perspective view showing the general construction of a vehicle seat 10 with a seating sensor 20 attached thereto, Figure 2 is a sectional view showing the state that the seating sensor 20 is attached to a cushion portion 11 of the vehicle seat 10, and Figure 3 is a top view partly in section of the cushion portion 11 of the vehicle seat 10.

As shown in Figure 1, the vehicle seat 10 is provided with the cushion portion 11, a seatback portion 12, and the seating sensor 20 comprising membrane switches. As shown in Figure 3, the cushion portion 11 is provided with a pad member 13 made of urethane form or the like and a skin member 14 made of a fabric, a synthetic leather (vinyl leather), a leather or the like which is attached to cover the front side (the upper surface) of the pad member 13.

On the upper surface of the pad member 13 of the cushion portion 11, as shown in Figures 2 and 3, a concave-shape groove portion or a concave groove 15 extending in the left-right direction (the vertical direction in Figure 3) is formed to be depressed, and the concave groove (concave portion) 15 has inside surfaces which are almost orthogonal to the upper surface of the pad member 13. Under the concave groove 15, an engaging member 16 comprising a metal wire is embedded and fixed in the pat member 13 in parallel to the concave groove 15 almost over the whole length of the concave groove 15. The engaging member 16 is for fixing the skin member 14 along the surface shape of the pad member 13 through fixing rings 17 referred to later.

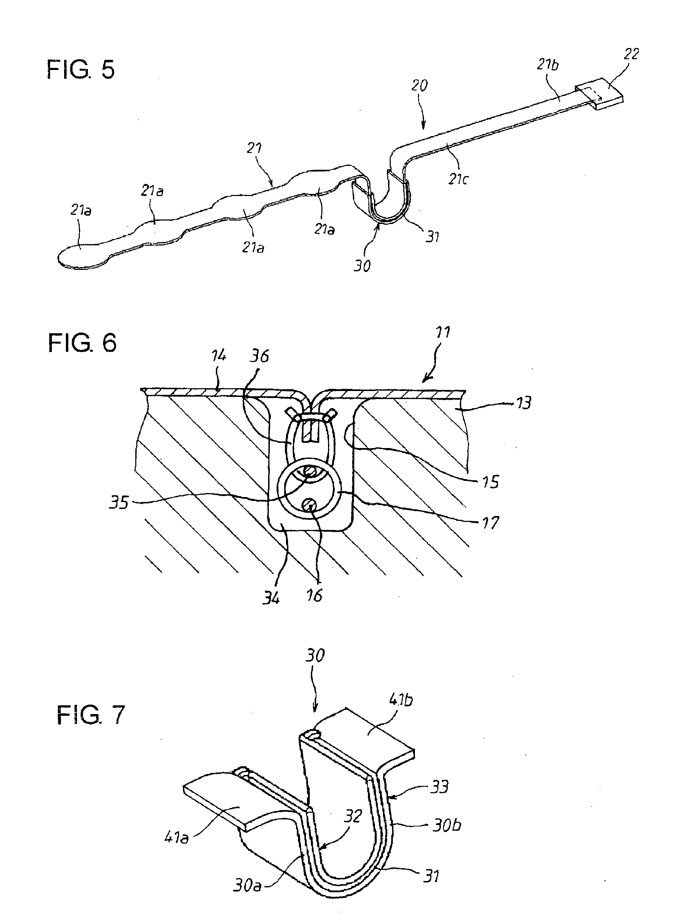

As shown in Figure 5, the seating sensor 20 is provided with a film-like (sheet-like) main body 21 having flexibility. The film-like main body 21 is adapted to be laid between the pad member 13 and the skin member 14 across the concave groove 15, as shown in Figures 2 and 3. The film-like main body 21 is provided with a plurality of detecting sections 21 a arranged on one end side in the longitudinal direction, an output section 21 b arranged on the other end side in the longitudinal direction, and a continuity section 21 c that electrically connects these detecting sections 21 a and the output section 21 b. In the embodiment, the film-like main body 21 takes an elongated belt-like shape, and the plurality of detecting sections 21 a are arranged at four places in the longitudinal direction of the film-like main body 21 at regular intervals.

Each detecting section 21 a is provided with an upper film which is in contact at its upper surface with the lower surface of the skin member 14 and which is provided with a contact point at the center of the inner surface, and a lower film which is in contact at its lower surface with the upper surface of the pad member 13 and which is provided with a contact point at the center of the inner surface, and the contact points are turned to ON or OFF when a passenger sits on the cushion portion 11.

The output section 21 b is for outputting signals detected by the detecting sections 21 a, and a connector 22 is connected to the output section 21 b. The connector 22 is coupled to an ECU (not shown) that judges the seating state of the passenger.

Although not shown, a double-adhesive tape is stuck on the back side on one end side in the longitudinal direction of the film-like main body 21 of the seating sensor 20, and with the double-adhesive tape, the one end side (the detecting section 21 a side) in the longitudinal direction of the film-like main body 21 is secured on the pad member 13 to preclude an uncomfortable feeling which the relative displacement between the seating sensor 20 and the pad member 13 gives at the time of seating. In this case, it is desirable that the double-adhesive tape is provided not to occupy the places of the detecting sections 21 a, so that it is avoided to deteriorate the sensitivity of the detecting sections 21 a.

Numeral 30 denotes a holding member made of a plastic or a rubber material that holds the film-like main body 21 of the seating sensor 20. As shown in Figure 4, the holding member 30 takes a generally U-shape as a whole as viewed from the front side, and the width of the side surfaces thereof has a length that is almost equal to the width dimension of the film-like main body 21. The holding member 30 is inserted into the concave groove 15 up to the bottom portion of the same and is held by the elastic force of the pad member 13 at a predetermined position in the concave groove 15.

Specifically, the holding member 30 comprises a pair of parallel facing wall portions 30a, 30b facing each other with a predetermined distance therebetween and a connection portion 30c being almost an arc shape that connects respective one end portions (bottom portions) of these facing wall portions 30a, 30b. The distance between respective outside surfaces of the pair of facing wall portions 30a, 30b is set to be slightly larger than the distance between the inside surfaces 15a, 15b on the concave groove 15 of the pad member 13. Thus, it is possible to hold the holding member 30 within the concave groove 15 by inserting, while elastically deforming the pad member 13, the holding member 30 into the concave groove 15 of the pad member 13 with the connection portion 30c oriented toward the bottom portion to the depth that the facing wall portions 30a, 30b are embedded in the concave groove 15.

The method for securing the holding member 30 to the concave groove 15 is not limited to elastically deforming the pad member 13 in the manner as described above. For example, in the method, the distance between the respective outside surfaces of the facing wall portions 30a, 30b of the holding member 30 may be set to be almost equal to the distance between the inside surfaces 15a, 15b of the concave groove 15 of the pad member 13, and the holding member 30 and the concave groove 15 may be secured by adhesion or by friction in sliding contact therebetween. Further, a fitting engagement structure may be provided between the facing wall portions 30a, 30b of the holding member 30 and the inside surfaces 15a, 15b of the concave groove 15, and the both may be secured by the relation of the fitting engagement therebetween.

In the holding member 30, a gap 31 comprising an almost U-shape slit that is slightly wider than the thickness of the film-like main body 21 is formed from one end side thereof in the width direction to a predetermined depth along the facing wall portions 30a, 30b and the connection portion 30. The both end portions of the gap 31 open at the end portions (upper ends) of the facing wall portions 30a, 30b. Specifically, the gap (slit) 31 is cut into the corresponding depth in the width direction of the film-like main body 21 with a little thickness left on the other end side in the width direction of the holding member 30. An inside protection wall 32 that covers the surface being on the skin member 14 side (the front side of the film-like main body 21) is formed on the inner side of the almost U-shape of the gap 31, that is, on the inner sides of the facing wall portions 30a, 30b and the connection member 30c, while an outside protection wall 33 that covers the surface being on the pad member 13 side (the back side of the film-like main body 21) is formed on the outer side of the almost U-shape of the gap 31, that is, on the outer sides of the facing wall portions 30a, 30b and the connection member 30c. In this manner, one ends in the width direction of the inside protection wall 32 and the outside protection wall 33 of the holding member 30 are connected to keep the gap 31, into which the continuity section 21 c at the center portion in the longitudinal direction of the film-like main body 21 is insertable, between the inside protection wall 32 and the outside protection wall 33.

Figure 5 shows the state that the film-like main body 21 is curved and held in the gap 31 of the holding member 30 at a part of the continuity section 21 c portion (hereafter referred to as continuity section constituting region). The film-like main body 21 is curved along an almost U-shape at the continuity section constituting region being at the center portion in the longitudinal direction and is held by being inserted in the gap 31 of the holding member 30. The curved continuity section constituting region of the film-like main body 21 inserted into the gap 31 of the holding member 30 is held in contact with the inside protection wall 32 and the outside protection wall 33 by the elastic force that urges the film-like main body 21 to turn back to the straight shape, so that unless a force is applied to urge the film-like main body 21 to be drawn out from the gap 31 in the width direction, the film-like main body 21 is held in the holding member 30 by the elastic force of itself.

In the state of holding the continuity section constituting region of the film-like main body 21, the holding member 30 can easily be inserted from the U-shaped bottom portion (the connection portion 30c) side into the concave groove 15 of the pad member 13, and the holding member 30 after being inserted into the concave groove 15 is held in the concave groove 15 thanks to the elastic force of the pad member 13. The film-like main body 21 held in the holding member 30 is protected by having the front side and the back side covered by the inside protection wall 32 and the outside protection wall 33 of the holding member 30. Thus, it does not occur that the film-like main body 21 is brought into direct contact with engaging member 16 comprising the wire as well as with an engageable fixing member 35 referred to later, so that the disconnection or damage can be prevented.

As shown in Figure 6, of the skin member 14, a portion covering the front part of the cushion member 11 and a portion covering the rear part thereof are sewed up together at a position corresponding to the concave groove 15, and a plurality of ribbon-shaped connection portions 36 are connected to the sewed-up portion at intervals in the left-right direction of the vehicle seat 10. These connection portions 36 are hooked on the engageable fixing member 35 which is provided on the skin member 14 in parallel to the engaging member 16. In the concave groove 15, naked concave portions 34 where the engaging member 16 is exposed are provided on both of left and right sides of the pad member 13 of the cushion portion 11 to be spaced from the center portion in the left-right direction. At each naked concave portion 34, a fixing ring 17 with a rift provided at one place in the circumferential direction is engaged with the engaging member 16 and the engageable fixing member 35 to encircle these members. Thus, the engageable fixing member 35 is tensioned by the fixing ring 17 toward the engaging member 16 side, so that the skin member 14 is secured to the pad member 13 to follow the seating surface of the same.

Although the holding member 30 (the seating sensor 20) is attached by utilizing the concave groove 15 as it is which is for securing the skin member 35 as described above, a wider concave groove may be formed by performing an additional machining on the concave groove 15. Further, the inside surfaces 15a, 15b of the concave groove 15 may not be orthogonal to the pad member 13 but be inclined thereto like an inverted conic shape, and the holding member 30 may be attached in the wider concave groove or the inverted conic shape concave groove.

Next, description will be made regarding the procedure for attaching the seating sensor 20 to the cushion portion 11 of the vehicle seat 10. The film-like main body 21 of the seating sensor 20 may be held in the holding member 30 at the time of being attached to the cushion portion 11. However, usually, the film-like main body 21 is prepared in advance in the form that the continuity section constituting region has been inserted in the gap 31 of the holding member 30 in the state of being curved to an almost U-shape.

First of all, in the state that the skin member 14 is not covered on the cushion portion 11, the holding member 30 holding the film-like main body 21 of the seating sensor 20 is inserted into the concave groove 15 of the pad member 13. Specifically, the holding member 30 is inserted from the arc-shape bottom portion (the connection portion 30c) side to the depth that the facing wall portions 30a, 30b are embedded in the concave groove 15, as the facing wall portions 30a, 30b forcibly widen the inside surfaces 15a, 15b of the concave groove 15.

Thus, the holding member 30 is held by the elastic force of the pad member 13 at a predetermined position, and the film-like main body 21 that protrudes from an opening at one end of the gap 31 of the holding member 30 is laid to traverse the concave groove 15. That is, one end side in the longitudinal direction of the film-like main body 21 is curved to follow the upper surface on the side ahead of the concave groove 15, whereby the plurality of detecting sections 21 a are arranged on the upper surface of the pad member 13 on the side ahead of the concave groove 15. The other end side in the longitudinal direction of the film-like main body 21 that protrudes from an opening at the other end of the gap 31 is also curved to follow the upper surface of the pad member 13 on the side behind the concave groove 15. In this state, the one end side in the longitudinal direction of the film-like main body 21 is stuck with the double-adhesive tape (not shown) on the surface of the pad member 13 to position the plurality of detecting sections 21 a on the predetermined places.

Subsequently, the engageable fixing member 35 connected to the skin member 14 through the connection members 36 is received in the concave groove 15, and at the left and right naked concave portions 34 of the cushion portion 11 spaced from the center in the left-right direction, the engaging member 16 of the pad member 13 and the engageable fixing member 35 of the skin member 14 are mutually engaged by the fixing rings 17, whereby the skin member 14 is secured to follow the surface shape of the pad member 13 (refer to Figure 6).

As a result, the plurality of detecting sections 21 a of the seating sensor 20 is arranged with themselves put between the pad member 13 and the skin member 14 of the cushion portion 11, and when the passenger sits on the cushion portion 11, at least one of the plurality of detecting sections 21 a is turned to ON, so that the passenger seating on the cushion portion 11 can be detected.

According to the foregoing embodiment, it is attained to obtain the seating sensor 20 for a vehicle that is easily attachable to the cushion portion 11 by inserting the holding member 30 into the concave groove 15 of the pad member 13. Further, since the film-like main body 21 of the seating sensor 20 can be held by being inserted into the gap 31 of the holding member 30, it becomes possible to carry the film-like main body 21 with the holding member 30 grasped, so that the transferring and handling of the seating sensor 20 become easy. In addition, since the continuity section constituting region of the film-like main body 21 is curved and held in the holding member 30 which is to be inserted into the concave groove 15 of the pad member 13 of the cushion portion 11 and since the holding member 30 is attached to the concave groove 15, even the film-like main body 21 having flexibility and being in the state of fluttering can easily be attached to the concave groove 15 of the pad member 13.

Furthermore, the front side and the back side of the film-like main body 21 having been inserted in the concave groove 15 are protected by the inside protection wall 32 and the outside protection wall 33 of the holding member 30, and thus, even if the film-like main body 21 were in a positional relation to interfere with the engaging member 16 of the pad member 13 or the engageable fixing member 35 of the skin member 14, the situation would reliably be avoided that the continuity section constituting region of the film-like main body 21 comes into contact with the engaging member 16 or the engageable fixing 35 to be disconnected or damaged.

Next, description will be made regarding various modified forms of the holding member 30 that has been described in the foregoing embodiment. Like that described in the foregoing embodiment, the holding members 30 which will be described hereinafter are made of a plastic or rubber material, and the same constructions as those described in the embodiment are given the same reference numerals, and the description of the same constructions will be omitted.

Figure 7 shows a first modified form of the holding member 30, and the difference from the foregoing embodiment resides in that the outside protection wall 33 of the pair of facing wall portions 30a, 30b of the holding member 30 are provided at respective end portions thereof with extended portions 41 a, 41 b that are respectively extended outward of the facing wall portions 30a, 30b to be curved in the form of an arc.

According to the first modified form, by attaching the holding member 30 in the concave groove 15 of the pad member 13 with the continuity section constituting region of the film-like main body 21 inserted and held in the gap 31 of the holding member 30 in the same manner as described in the foregoing embodiment, the one end side and the other end side in the longitudinal direction of the film-like main body 21 can be guided along the extended portions 41 a, 41 b in mutually opposite directions orthogonal to the facing wall portions 30a, 30b, so that the opposite end portions of the continuity section constituting region that protrude from the both end portions of the gap 31 can be curved without an excessive force applied thereto.

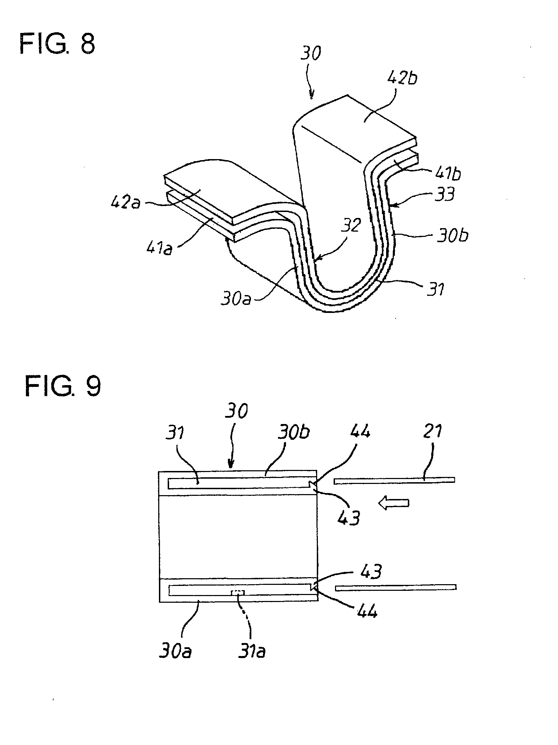

Figure 8 shows a second modified form of the holding member 30, and the difference from the foregoing first modified form resides in that respective end portions of the inside protection wall 32 of the holding member 30 are also provided with extended portions 42a, 42b that are extended in parallel to the aforementioned extended portions 41 a, 41 b of the outside protection wall 33.

According to the second modified form, the film-like main body 21 can be curved in the form of an arc between the both extended portions 41 a, 41 b and 42a, 42b. Thus, even when a seating pressure is applied to the pad member 13, the looseness of the film-like main body 21 can be suppressed, so that the curvature of the film-like main body 21 can be restrained from becoming larger thereby to suppress the disconnection or the like.

Figure 9 shows a third modified form of the holding member 30, and the difference from the foregoing embodiment resides in that the gap 31 formed in the holding member 30 is formed at the opening portion with coming-off restraining portions 43 that restrain the continuity section constituting region of the film-like main body 21 having been inserted into the gap (slit) 31, from coming off from the opening portion. The coming-off restraining portions 43 are formed at respective one ends thereof with inclined surfaces 44 that ease the insertion of the film-like main body 21 into the gap 31.

According to the third modified form, the coming-off of the film-like main body 21 having been inserted into the gap 31 of the holding member 30 can be prevented by the coming-off restraining portions 43 provided at the opening portion of the gap 31. In this form, as indicated by the two-dot-chain line in Figure 9, a protrusion 31 a may be provided at a part of the gap 31, and the film-like main body 21 may be provided with an engaging hole engageable with the protrusion 31 a, in which case, it also becomes possible to prevent the continuity section constituting region of the film-like main body 21 having been inserted into the gap 31 from moving in the longitudinal direction.

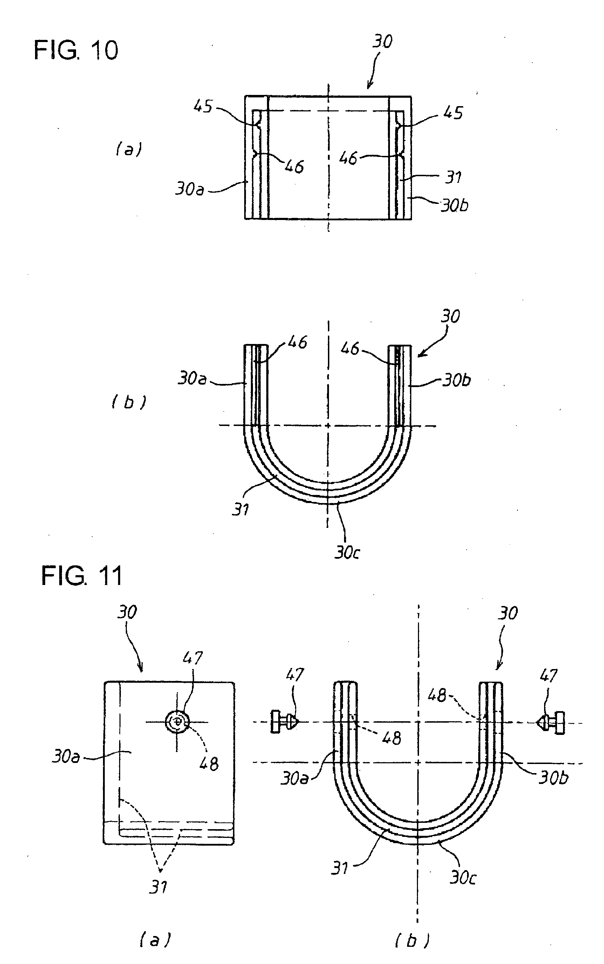

Figure 10 shows a fourth modified form of the holding member 30, and the difference from the foregoing embodiment resides in that the film-like main body 21 of the seating sensor 20 having been inserted into the gap 31 can be restrained by protrusions 45, 46 provided to protrude in the gap 31 from moving in the longitudinal direction of the continuity section constituting region of the film-like main body 21 as well as in the width direction orthogonal thereto.

That is, as shown in Figures 10 (a) and 10 (b), in the gap 31 formed in the holding member 30, two protrusions 45, 46 each being an almost mountain shape in section are bodily protruded along the facing wall portions 30a, 30b in correspondence to each of the facing wall portions 30a, 30b. The two protrusions 45, 46 are protruded to be directed in mutually opposite directions with a space therebetween in the depth direction of the gap 31 (in the width direction of the holding member 30).

Thus, by inserting the continuity section constituting region of the film-like main body 21 into the gap 31 of the holding member 30, the mounting is carried out as the peaks of the almost mountain shape of the protrusions 45, 46 are somewhat elastically deformed by the end portion of the continuity section constituting region, so that the elastic holding force of the protrusions 45, 46 can restrain the continuity section constituting region of the film-like main body 21 from moving in the longitudinal direction as well as in the width direction. The protrusions 45, 46 can be formed bodily with the holding member 30 at the time of manufacturing of the same.

Figure 11 shows a fifth modified form of the holding member 30, and the difference from the foregoing embodiment resides in that engaging pins 47 attached to the facing wall portions 30a, 30b of the holding member 30 can position the continuity section constituting region of the film-like main body 21 having been inserted into the gap 31 of the holding member 30, in the longitudinal direction of the continuity section constituting region as well as in the width direction orthogonal thereto.

That is, as shown in Figures 11 (a) and 11 (b), the pair of facing wall portions 30a, 30b of the holding member 30 are formed with holding holes 48 on the same axis to pass through the inside protection wall 32 and the outside protection wall 33. On the other hand, although not shown in the drawing, the continuity section constituting region of the film-like main body 21 inserted into the gap 31 of the holding member 30 is formed with positioning holes at places corresponding to the holding holes 48. Engaging pins 47 made of a resin are press-fitted and secured in the holding holes 48 to pass through the positioning holes formed in the continuity section constituting region.

Therefore, by inserting the continuity section constituting region into the gap 31 of the holding member 30 so that the positioning holes respectively correspond to the holding holes 48, and in this state, by press-fitting and securing the engaging pins 47 in the holding holes 48, the continuity section constituting region of the film-like main body 21 can be held in the state of being positioned relative to the holding member 30 in the longitudinal direction and the width direction.

According to the fifth modified form, it becomes possible to position the continuity section constituting region more reliably in comparison with the foregoing fourth modified form. The holding hole 48 may be provided in either one facing wall portion 30a or 30b only of the holding member 30.

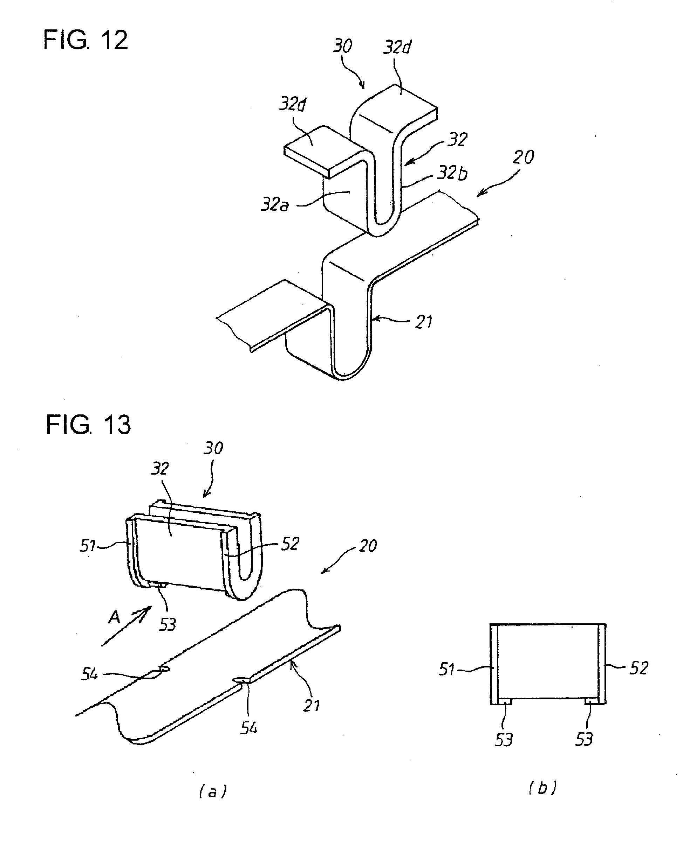

Figure 12 shows a sixth modified form of the holding member 30, and the difference from the foregoing embodiment and the respective modified forms resides in that the holding member 30 is deprived of the gap (slit) 31 and is configured by an inside protection wall 32 only that curves and holds the continuity section constituting region while covering the surface on the skin member 14 side (the front side of the film-like main body 21) of the continuity section constituting region of the film-like main body 21.

That is, as shown in Figure 12, the holding member 30 is provided with the inside protection wall 32 of a U-shape and extended portions 32d which are extended by curving upper ends of the facing wall portions 32a, 32b of the inside protection wall 32 horizontally in mutually opposite directions. The continuity section constituting region is curved at the front side along the outer surfaces on the facing wall portions 32a, 32b of the inside protection walls 32 as well as along the lower surfaces of the extended portions 32d, and the continuity section constituting region is bodily held on the holding member 30 with an adhesive or the like.

As described above, even in the form that the holding member 30 covers the surface on the skin member 14 side of the continuity section constituting region of the film-like main body 21, it is of course possible to prevent the surface on the skin member 14 side of the continuity section constituting region from contacting the engageable fixing member 35, and by holding the holding member 30 at a position of a predetermined depth in the concave groove 15 of the holding member 30, it also becomes possible to prevent the continuity section constituting region from contacting the engaging member 16 of the pad member 13.

Figure 13 shows a seventh modified form of the holding member 30, and it is the same as the foregoing sixth embodiment in that the holding member 30 is configured by the inside protection wall 32 only that curves and holds the continuity section constituting region while covering the surface on the skin member 14 side of the continuity section constituting region of the film-like main body 21, but differs therefrom in that the continuity section constituting region is bodily held by the holding member 30 through convexities and concavities.

That is, as shown in Figures 13(a) and 13(b), the holding member 30 is provided with the inside protection wall 32, and opposite end portions in the width direction of the inside protection wall 32 have restraining portions 51, 52 comprising flange portions that have a slightly wider space therebetween than the dimension in the width direction of the continuity section constituting region of the film-like main body 21 for restraining the continuity section constituting region from moving in the width direction. Further, at a U-shape bottom portion of the inside protection wall 32, there are formed engaging protrusions 53 that protrude mutually inward from both of the restraining portions 51, 52. On the other hand, notch portions 54 being engageable with the engaging protrusions 53 are formed on the continuity section constituting region which is to be held on the holding member 30.

Therefore, by engaging the notch portions 54 of the continuity section constituting region with the engaging protrusions 53 in the state that the continuity section constituting region is placed to make the notch portions 54 thereof correspond to the concave groove 15 of the pad member 13, and then by thrusting the holding member 30 into the concave groove 15, the continuity section constituting region is put between the both restraining portions 51, 52 and is curved along the inside protection wall 32. At this time, the continuity section constituting region is restrained by the engagements with the engaging protrusions 53 from moving in the longitudinal direction and is restrained by the engagements with the both restraining portions 51, 52 from moving in the width direction.

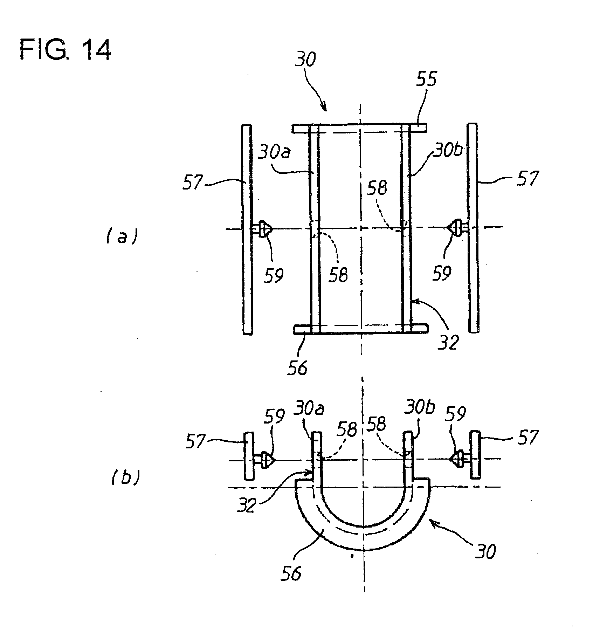

Figure 14 shows an eighth modified form of the holding member 30. In the same manner as described in the foregoing seventh modified form, there are provided restraining portions 55, 56 at opposite end portions in the width direction of an inside protection wall 32 that curves and holds the continuity section constituting region while covering the surface on the skin member 14 side of the continuity section constituting region of the film-like main body 21, and fixing pieces 57 that are to be fixed on a pair of facing wall portions 30a, 30b with the continuity section constituting region put therebetween.

That is, as shown in Figures 14(a) and 14(b), the pair of facing wall portions 30a, 30b are respectively formed with holding holes 58 on the same axis. The fixing pieces 57 with engaging pins 59 that are engageable with the holding holes 58 are attached to the outside surfaces of the pair of facing wall portions 30a, 30b. The fixing pieces 57 are almost the same as the continuity section constituting region in the dimension in the width direction. Even in this form, although not shown in the drawing, the continuity section constituting region curved along the inside protection wall 32 of the holding member 30 is formed with positioning holes at positions corresponding to the holding holes 58.

Therefore, by curving the continuity section constituting region to a U-shape along the inside protection wall 32 of the holding member 30 with the positioning holes corresponding respectively to the holding holes 58, and in the state, by press-fitting and securing the engaging pins 59 provided on the fixing pieces 57 to pass through the positioning holes of the continuity section constituting region, it is possible to easily position and hold the continuity section constituting region at respective spaces between the fixing pieces 57 and the facing wall portions 30a, 30b.

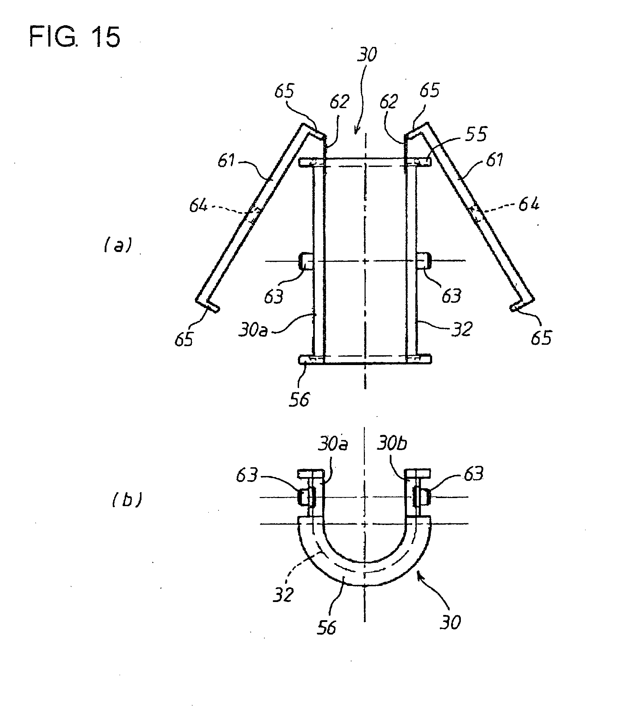

Figure 15 shows a ninth modified form of the holding member 30. The differences from the foregoing eighth modified form reside in the following respects. As shown in Figures 15(a) and 15(b), fixing pieces 61 that put the continuity section constituting region of the film-like main body 21 between themselves and the facing wall portions 30a, 30b of the holding member 30 are formed bodily with the facing wall portions 30a, 30b through flexible connection portions 62. The facing wall portions 30a, 30b are provided thereon with engaging pins 63 that pass through positioning holes provided in the continuity section constituting region. The fixing pieces 61 are provided at opposite ends thereof with gripping portions 65 for putting therebetween the restraining portions 55, 56 of the facing wall portions 30a, 30b.

According to the ninth modified form, by pivotally moving the fixing pieces 61 about the flexible connection portions 62, it is possible to easily position and hold the continuity section constituting region between the inside protection walls 32 and the fixing pieces 61.

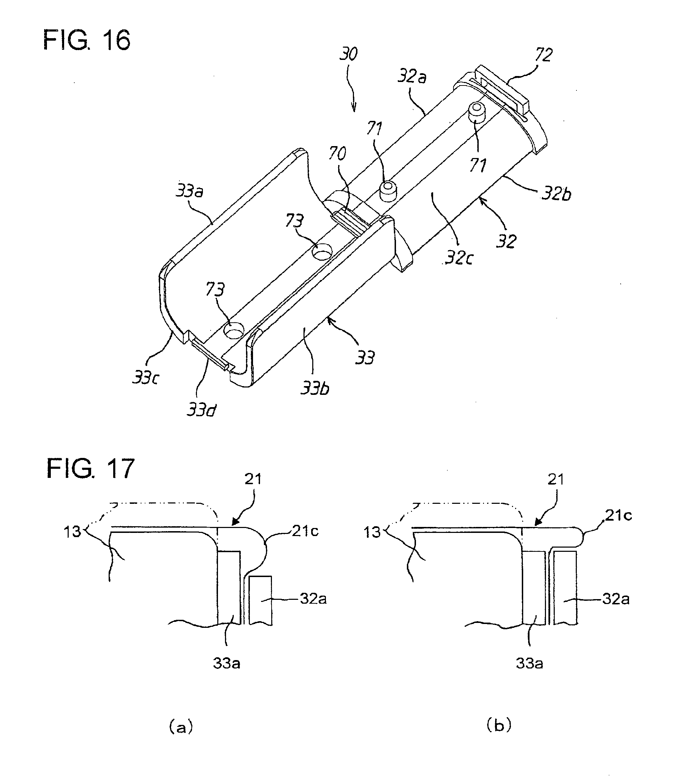

Figures 16 and 17 show a tenth modified form of the holding member 30. The differences from the ninth modified form reside in that a flexible connection portion 70 for enabling an inside protection wall 32 and an outside protection wall 33 to be pivotable relatively is changed in position and that end portions of the outside protection wall 33 are protruded beyond end portions of the inside protection wall 32.

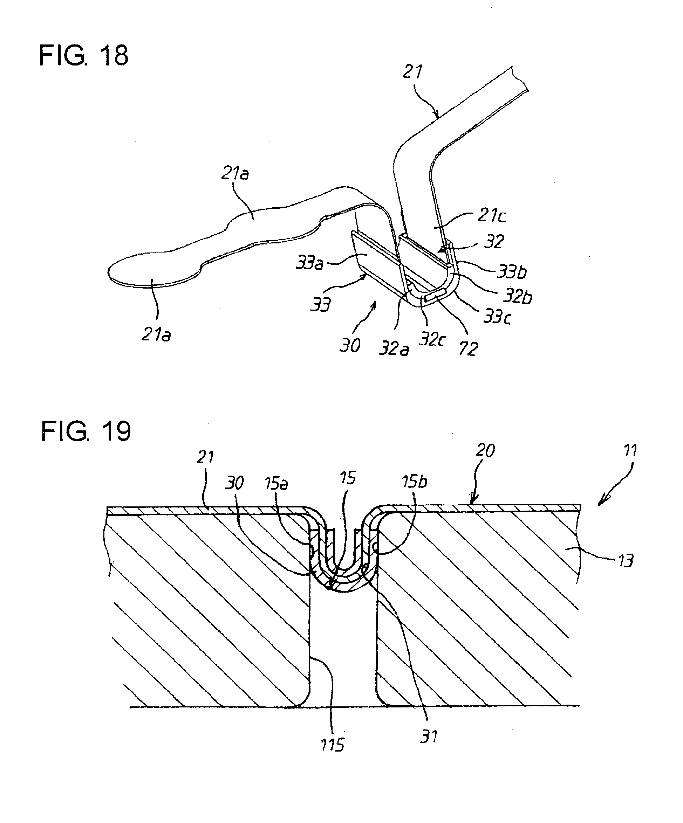

Specifically, as shown in Figures 16 and 18, the holding member 30 is composed of the outside protection wall 33 that has a pair of facing wall portions 33a, 33b and a connection portion 33c connecting respective one ends (lower ends) of the facing wall portions 33a, 33b, and the inside protection wall 32 that has a pair of facing wall portions 32a, 32b and a connection portion 32c connecting respective one ends (lower ends) of the facing wall portions 32a, 32b. The flexible connection portion 70 is provided at one end in the width direction of the outside protection wall 33. As viewed in the state that the inside protection wall 32 is held with the connection portion 32c (the bottom portion) directed upside, one end of the connection portion 32c (the bottom portion) of the inside protection wall 32 is pivotably connected to the flexible connection portion 70. The inside protection wall 32 is pivotally moved about the flexible connection portion 70 relative to the outside protection wall 33 to be received in the outside protection wall 33 thereby to put therebetween the continuity section constituting region of the film-like main body 21.

Two protrusions 71 with a space therebetween in the width direction are protruded on the outside surface side of the connection portion 32c of the inside protection wall 32. Further, at one end in the width direction of the connection portion 32c of the inside protection wall 32, there is protruded an engageable fixing portion 72 that is fixed by being engaged with an end portion 33d in the width direction of the connection portion 33c of the outside protection wall 33 when the inside protection wall 32 is pivotally moved about the flexible connection portion 70 to be received in the outside protection wall 33.

On the other hand, the connection portion 33c of the outside protection wall 33 is formed on the outside with engaging holes 73 which are brought into engagements with the protrusions 71 of the inside protection wall 32 when the inside protection wall 32 is pivotally moved about the flexible connection portion 70 to be received in the outside protection wall 33.

The continuity section constituting region of the film-like main body 21 is configured to be put and held between the outside surface of the inside protection wall 32 and the inside surface of the outside protection wall 33 as shown in Figure 18 when the inside protection wall 32 is pivotally moved about the flexible connection portion 70 to be received in the outside protection wall 33. Although not shown in the drawing, the continuity section constituting region of the film-like main body 21 is provided with engaging holes through which the protrusions 71 protruded on the inside protection wall 32 pass for engagements. Through the engagements between the engaging holes and the protrusions 71, the continuity section constituting region of the film-like main body 21 is restrained from moving in the longitudinal direction and the width direction orthogonal to the same.

As shown in Figure 17(a), other ends (upper ends) of the facing wall portions 32a, 32b of the inside protection wall 32 are set to be shorter by a predetermined height than other ends (upper ends) of the facing wall portions 33a, 33b of the outside protection wall 33. In other words, the other ends of the facing wall portions 33a, 33b of the outside protection wall 33 are protruded beyond the other ends of the facing wall portions 32a, 32b of the inside protection wall 32. Thus, as shown in the same figure, even when a seating pressure causes the pad member 33 to be elastically deformed (compressed) thereby to loosen the film-like main body 21, the loosened portion of the film-like main body 21 can be suppressed to have a small curvature in comparison with the case that the inside protection wall 32 and the outside protection wall 33 are equal in height as shown in Figure 17(b), and a stress concentration on the loosened portion is mitigated. Generally speaking, the stress concentration tends to easily occur as the loosened portion of the film-like main body 21 becomes large in curvature, and hence, this gives rise to an anxiety that a disconnection takes place on the continuity section 21 c. By setting the heights of the inside protection wall 32 and the outside protection wall 33 as described above, there can be expected an effect of restraining the disconnection of the continuity section 21 c more preferably.

According to the foregoing tenth modified form, by pivotally moving the inside protection wall 32 connected to the outside protection wall 33 through the flexible connection portion 70, about the flexible connection portion 70 to be received in the outside protection wall 33 and then by fixedly engaging the engageable fixing portion 72 with the end portion 33d of the outside protection wall 33, the continuity section constituting region of the film-like main body 21 can be put between the inside protection wall 32 and the outside protection wall 33, so that it is possible to easily hold the continuity section constituting region. In addition, by protruding the other ends of the outside protection wall 33 beyond the other ends of the inside protection wall 32, the opposite end portions of the continuity section constituting region can be restrained from becoming large in curvature even when the seating pressure causes the continuity section constituting region to be loosened, and hence, the disconnection can be suppressed.

In the foregoing embodiment, the holding member 30 has been described as one taking the U-shape which is made by connecting the bottom portions of the pair of facing wall portions 30a, 30b through the arc-shape connection portion 30c. However, the shape of the holding member 30 is not necessarily required to be the U-shape in a strict sense, and may be, for example, an almost inverted Π-shape.

Further, in the foregoing embodiment, description has been made regarding the example that the holding member 30 is attached in the concave groove 15 of the pad member 13. However, as shown in Figure 19, a part of the concave groove 15 for attaching the holding member 30 therein may be made to pass through the pad member 13 to the lower part of the same, and the holding member 30 may be attached in such a through hole 115. The concave portion in the claims encompasses any of the concave groove 15 and the through hole 115.

In the foregoing embodiment (inclusive of the modified forms), description has been made regarding the form in which the surface on the skin member 14 side and the surface on the pad member 13 side of the continuity section constituting region of the film-like main body 21 of the seating sensor 20 are protected by the holding member 30 at both sides or only one side thereof, and which is capable of avoiding the situation that the film-like main body 21 is disconnected or damaged in contact with the engaging member 16 and the engageable fixing member 35. However, the engaging member 16 and the engageable fixing member 35 are not necessarily those components essential to the present invention, and the present invention is applicable to one wherein there is no possibility of interferences with the engaging member 16 of the pad member 13 and the engageable fixing member 35 of the skin member 14.

Like this, the present invention is not limited to the foregoing embodiment and may take forms of various kinds if not thereby departing from the scope of the present invention as defined in the claims.

### INDUSTRIAL APPLICABILITY

A seating sensor for a vehicle and an attaching structure therefor according to the present invention are suitable for use in a vehicle seat that detects the passenger seating on a cushion portion.

### DESCRIPTION OF SYMBOLS

10...vehicle seat, 11...cushion portion, 13...pad member, 14...skin member, 15...concave portion (concave groove), 15a, 15b...inside surfaces, 16...engaging member, 17...fixing ring, 20...seating sensor, 21...film-like main body, 21 a...detecting section, 21 b...output section, 21 c...continuity section constituting region (continuity section), 30...holding member, 30a, 30b...facing wall portions, 30c...connection portion, 31...gap (slit), 32...inside protection wall, 32a, 32b...facing wall portions, 33...outside protection wall, 33a, 33b...facing wall portions, 35...engageable fixing member, 57...fixing pieces, 62, 70...flexible connection portion

## Claims

1. A seating sensor for a vehicle seat (10) comprising:
a film-like main body (21) with flexibility adapted to be laid, between a surface on a seating side of a pad member (13) of a cushion portion (11) of the vehicle seat (10) partly with a concave portion (15) formed to be depressed and a skin member (14) attached to the pad member (13) to cover the surface on the seating side, across the concave portion (15) and having a plurality of detecting sections (21 a) for detecting a passenger seating on the pad member (13) in contact with the surface on the seating side of the pad member (13), an output section (21 b) for outputting signals detected by the detecting sections (21 a), and a continuity section (21 c) for transmitting the signals detected by the detecting sections (21 a) to the output section (21 b); and
a holding member (30) configured to curve and hold a part of the continuity section (21 c) constituting region of the film-like main body (21) and to be able to be received together with the curved continuity section constituting region (21 c) in the concave portion (15) and having a pair of facing wall portions (32a, 32b) facing inside surfaces of the concave portion (15) and a connection portion (30c) connecting respective one ends of the facing wall portions (32a, 32b) for covering a surface on at least one side of the curved continuity section constituting region (21 c) by the facing wall portions (32a, 32b) and the connection portion (30c), **characterized in that**
the pair of facing wall portions (32a, 32b) and the connection portion (30c) are configured to include an inside protection wall (32) which curves and holds the continuity section constituting region (21 c) while covering the surface on the skin member side of the continuity section constituting region (21 c), and an outside protection wall (33) which curves and holds the continuity section constituting region (21 c) while covering a surface on the pad member side of the continuity section constituting region (21 c), and
the holding member has a flexible connection portion (62, 70) which connects parts at one end in a width direction of the inside protection wall (32) and the outside protection wall (33) and which makes the inside and outside protection walls (32, 33) pivotable relatively about the connection portion (30c).

2. The seating sensor for a vehicle seat according to Claim 1, wherein the pair of facing wall portions (32a, 32b) and the connection portion (30c) are constructed to include the inside protection wall (32) which curves and holds the continuity section constituting region (21 c) while covering a surface on the skin member side of the continuity section constituting region (21 c).

3. The seating sensor for a vehicle seat according to Claim 2, wherein the holding member (30) has fixing pieces (57, 61) which are attachable to the inside protection wall (32) with at least a part of the curved continuity section constituting region (21 c) interposed therebetween.

4. The seating sensor for a vehicle seat according to Claim 3, further comprising flexible connection portions (62, 70) which connect parts at one end in a width direction of the inside protection wall (32) and the fixing pieces (57, 61) and which enable the fixing pieces (57, 61) to be pivotable about the connection portions (62, 70) relative to the inside protection wall (32).

5. The seating sensor for a vehicle seat according to any one of the preceding claims, wherein other ends of the facing wall portions (32a, 32b) constituting the outside protection wall (33) are configured to protrude beyond other ends of the facing wall portions (32a, 32b) constituting the inside protection wall (32).

6. The seating sensor for a vehicle seat in any one of according to any one of the preceding claims, wherein at least either the facing wall portions (32a, 32b) or the connection portion (30c) is provided at opposite end portions in a width direction with restraining portions (45, 46) for restraining the continuity section constituting region (21c) from moving in the width direction.

7. The seating sensor for a vehicle seat according to any one of the preceding claims, wherein the inside protection wall (32) and the outside protection wall (33) are connected at one end in a width direction thereof to keep a gap (31) which enables the continuity section constituting region (21 c) to be inserted thereinto, between the inside protection wall (32) and the outside protection wall (33).

8. The seating sensor for a vehicle seat according to Claim 7, wherein at least one of the inside protection wall (32) and the outside protection wall (33) is provided at the other end in the width direction with a coming-off restraining portion (43) which restrains the continuity section constituting region (21 c) having been inserted into the gap (31) from coming off from the other end.

9. The seating sensor for a vehicle seat according to any one of the preceding claims, wherein the holding member (30) is provided with extended portions (32d) which are extended from the other ends of the facing wall portions (32a, 32b) along the surface on the seating side of the pad member (13).

10. An attaching method for a seating sensor for a vehicle seat (10) for attaching a seating sensor (20) for a vehicle seat (10) to a cushion portion of the vehicle seat (10), the seating sensor (20) comprising:
a film-like main body (21) with flexibility adapted to be laid, between a surface on a seating side of a pad member (13) of a cushion portion (11) of the vehicle seat (10) partly with a concave portion (15) formed to be depressed and a skin member (14) attached to the pad member (13) to cover the surface on the seating side, across the concave portion (15) and having a plurality of detecting sections (21 a) for detecting a passenger seating on the pad member (13) in contact with the surface on the seating side of the pad member (13), an output section (21 b) for outputting signals detected by the detecting sections (21 a), and a continuity section (21 c) for transmitting the signals detected by the detecting sections (21 a) to the output section (21 b); and
a holding member (30) configured to curve and hold a part of the continuity section (21 c) constituting region of the film-like main body (21) and to be able to be received together with the curved continuity section constituting region (21 c) in the concave portion (15) and having a pair of facing wall portions (32a, 32b) facing inside surfaces of the concave portion (15) and a connection portion (30c) connecting respective one ends of the facing wall portions (32a, 32b) for covering a surface on at least one side of the curved continuity section constituting region (21 c) by the facing wall portions (32a, 32b) and the connection portion (30c),
**characterized in that**
a portion forming the concave portion (15) in the pad member (13) is elastically deformed to enlarge a distance between inside surfaces of the concave portion (15), the facing wall portions (32a, 32b) of the holding member (30) or the curved continuity section constituting region (21 c) of the film-like main body (21 c) is held in sliding contact with the inside surfaces (15a, 15b), and the facing wall portions (32a, 32b) and the connection portion (30c) of the holding member (30) and the curved continuity section constituting region (21 c) are received and held in the concave portion (15).

11. The attaching method for the seating sensor for a vehicle seat according to Claim 10, wherein the holding member (30) is received in the concave portion (15) to make the holding member (30) or the curved continuity section constituting region (21 c) contact a bottom surface of the concave portion (15).

## Patentansprüche

1. Sitzsensor für einen Fahrzeugsitz (10) mit
einem Film-artigen Hauptkörper (21) mit einer Flexibilität, der dafür angepasst ist, um zwischen einer Oberfläche auf einer Sitzseite eines Polsterbauteils (13) eines Kissenabschnitts (11) des Fahrzeugsitzes (10), das teilweise mit einem eingedrückt ausgeformten konkaven Abschnitt (15) versehen ist und einem Außenhautbauteil (14) eingelegt zu werden, das an dem Polsterbauteil (13) befestigt ist, um die Oberfläche auf der Sitzseite über den konkaven Abschnitt (15) hinweg abzudecken und der eine Mehrzahl von Erfassungsbereichen (21 a) für das Erfassen eines Passagiers, der auf dem Polsterbauteil (13) unter in Kontakt mit der Oberfläche auf der Sitzseite des Polsterbauteils (13) sitzt, einen Ausgabebereich (21 b) für das Ausgeben von Erfassungssignalen durch die Erfassungsbereiche (21 a) und einen Erstreckungsbereich (21c) hat für das Übertragen der durch die Erfassungsbereiche (21a) erzeugten Erfassungssignale zu dem Ausgabebereich (21 b) und mit
einem Haltebauteil (30), das dafür angepasst ist, einen Teil des Erstreckungsbereichs (21c) zu krümmen und zu halten, der eine Region des Film-artigen Hauptkörpers (21) bildet und das dazu in der Lage ist, zusammen mit der den gekrümmten Erstreckungsbereich ausbildenden Region (21c) in dem konkaven Abschnitt (15) aufgenommen zu werden und das ein Paar einander zugewandter Wandabschnitte (32a, 32b), welche zu inneren Oberflächen des konkaven Abschnitts (15) hinweisend ausgerichtet sind, sowie einen Verbindungsabschnitt (30c) hat, der jeweils eine Enden der zueinander ausgerichteten Wandabschnitte (32a, 32b) verbindet, um eine Oberfläche auf zumindest einer Seite der den gekrümmten Erstreckungsbereich ausbildenden Region (21c) durch die zueinander ausgerichteten Wandabschnitte (32a, 32b) und den Verbindungsabschnitt (30c) abzudecken,
**dadurch gekennzeichnet, dass**
das Paar einander zugewandter Wandabschnitte (32a, 32b) sowie der Verbindungsabschnitt (30c) dazu angepasst sind, um eine Innenschutzwand (32), welche die den Erstreckungsbereich ausbildende Region (21c) krümmt und hält während sie die Oberfläche auf Seiten des Außenhautteils abdeckt sowie eine Außenschutzwand (33) zu enthalten, welche die den Erstreckungsbereich bildende Region (21c) krümmt und hält während sie eine Oberfläche der den Erstreckungsbereich bildende Region (21c) auf Seiten des Polsterbauteils abdeckt, wobei
das Haltebauteil einen flexiblen Verbindungsabschnitt (62, 70) hat, der Teile an einem Ende in Breitenrichtung der Innenschutzwand (32) und der Außenschutzwand (33) verbindet und der die Innen- und Außenschutzwände (32, 33) schwenkbar relativ um den Verbindungsabschnitt (30c) macht.

2. Sitzsensor für einen Fahrzeugsitz (10) nach Anspruch 1, wobei das Paar einander zugewandter Wandabschnitte (32a, 32b) und der Verbindungsabschnitt (30c) so ausgebildet sind, um die Innenschutzwand (32) zu enthalten, welche die den Erstreckungsbereich ausbildende Region (21c) krümmt und hält, während sie die Oberfläche der den Erstreckungsbereich ausbildenden Region (21c) auf Seiten des Außenhautteils bedeckt.

3. Sitzsensor für einen Fahrzeugsitz (10) nach Anspruch 2, wobei das Haltebauteil (30) Befestigungsstücke (57, 61) hat, welche an der Innenschutzwand (32) befestigbar sind, wobei zumindest ein Teil der gekrümmten den Anschlussbereich ausbildenden Region (21 c) dazwischen eingefügt ist.

4. Sitzsensor für einen Fahrzeugsitz (10) nach Anspruch 3, welcher ferner flexible Verbindungsabschnitte (62, 70) aufweist, welche Teile an einem Ende in Breitenrichtung der Innenschutzwand (32) und der Befestigungsstücke (57, 61) verbinden und es den Befestigungsstücken (57, 61) ermöglichen, relativ zu der Innenschutzwand (32) schwenkbar um die Verbindungsabschnitte (62, 70) zu sein.

5. Sitzsensor für einen Fahrzeugsitz (10) nach einem der vorstehenden Ansprüche, wobei andere Enden der einander zugewandten Wandabschnitte (32a, 32b), welche die Außenschutzwand (33) ausbilden, so gestaltet sind, dass sie über andere Enden der einander zugewandten Wandabschnitte (32a, 32b) hinausragen, welche die Innenschutzwand (32) ausbilden.

6. Sitzsensor für einen Fahrzeugsitz (10) nach einem der vorstehenden Ansprüche, wobei mindestens entweder die einander zugewandten Wandabschnitte (32a, 32b) oder der Verbindungsabschnitt (30c) an entgegengesetzten Enden in Breitenrichtung mit Zurückhalteabschnitten (45, 46) ausgestattet sind, um die den Erstreckungsbereich ausbildende Region (21c) daran zu hindern, sich in Breitenrichtung zu bewegen.

7. Sitzsensor für einen Fahrzeugsitz (10) nach einem der vorstehenden Ansprüche, wobei die Innenschutzwand (32) und die Außenschutzwand (33) an einem Ende in Breitenrichtung miteinander verbunden sind, um einen Spalt (31) zwischen der Innenschutzwand (32) und der Außenschutzwand (33) zu belassen, welcher es der den Anschlussbereich ausbildenden Region (21c) ermöglicht, darin eingefügt zu werden.

8. Sitzsensor (20) für einen Fahrzeugsitz (10) nach Anspruch 7, wobei die Innenschutzwand (32) und/oder die Außenschutzwand (33) an dem anderen Ende in Breitenrichtung mit einem Herauskomm-Zurückhalteabschnitt (43) versehen ist, welcher die in den Spalt eingefügte den Erstreckungsbereich ausbildende Region daran hindert, an dem anderen Ende herauszukommen.

9. Sitzsensor für einen Fahrzeugsitz (10) nach einem der vorstehenden Ansprüche, wobei das Haltebauteil (30) mit Verlängerungsabschnitten (32d) versehen ist, die sich von den anderen Enden der einander zugewandten Wandabschnitten (32a, 32b) entlang der Oberfläche der Sitzseite des Polsterbauteils (13) erstreckend.

10. Befestigungsverfahren für einen Sitzsensor für einen Fahrzeugsitz (10), um einen Sitzsensor (20) für einen Fahrzeugsitz (10) an einem Kissenabschnitt des Fahrzeugsitzes (10) zu befestigen, wobei der Sitzsensor (20) folgendes aufweist:
einen Film-artigen Hauptkörper (21) mit einer Flexibilität, der dafür angepasst ist, um zwischen einer Oberfläche auf einer Sitzseite eines Polsterbauteils (13) eines Kissenabschnitts (11) des Fahrzeugsitzes (10), das teilweise mit einem eingedrückt ausgeformten konkaven Abschnitt (15) versehen ist und einem Außenhautbauteil (14) eingelegt zu werden, das an dem Polsterbauteil (13) befestigt ist, um die Oberfläche auf der Sitzseite über den konkaven Abschnitt (15) hinweg abzudecken und der eine Mehrzahl von Erfassungsbereichen (21 a) für das Erfassen eines Passagiers, der auf dem Polsterbauteil (13) unter in Kontakt mit der Oberfläche auf der Sitzseite des Polsterbauteils (13) sitzt, einen Ausgabebereich (21 b) für das Ausgeben von Erfassungssignalen durch die Erfassungsbereiche (21a) und einen Erstreckungsbereich (21 c) hat für das Übertragen der durch die Erfassungsbereiche (21 a) erzeugten Erfassungssignale zu dem Ausgabebereich (21 b) und
ein Haltebauteil (30), das dafür angepasst ist, einen Teil des Erstreckungsbereichs (21c) zu krümmen und zu halten, der eine Region des Film-artigen Hauptkörpers (21) bildet und das dazu in der Lage ist, zusammen mit dem gekrümmten Erstreckungsabschnitt (21c) in dem konkaven Abschnitt (15) aufgenommen zu werden und das ein Paar einander zugewandter Wandabschnitte (32a, 32b), welche zu inneren Oberflächen des konkaven Abschnitts (15) hinweisend ausgerichtet sind, sowie einen Verbindungsabschnitt (30c) hat, der jeweils eine Enden der einander zugewandten Wandabschnitte (32a, 32b) verbindet, um eine Oberfläche auf zumindest einer Seite der den gekrümmten Erstreckungsbereich bildenden Region (21 c) durch die einander zugewandten Wandabschnitte (32a, 32b) und den Verbindungsabschnitt (30c) abzudecken,
**dadurch gekennzeichnet, dass**
ein Abschnitt, der den konkaven Abschnitt (15) in dem Polsterbauteil (13) ausbildet, elastisch deformiert wird, um einen Abstand zwischen Innenflächen des konkaven Abschnitts (15) zu vergrößern, wobei die einander zugewandten Wandabschnitte (32a, 32b) des Haltebauteils (30) oder die gekrümmte, den Erstreckungsabschnitt bildende Region (21c) des Film-artigen Hauptkörpers (21c) in Gleitkontakt mit den Innenflächen (15a, 15b) gehalten wird, und wobei die einander zugewandten Wandabschnitte (32a, 32b) sowie der Verbindungsabschnitt (30c) des Haltebauteils (30) und die gekrümmte, den Erstreckungsabschnitt ausbildende Region (21c) in dem konkaven Abschnitt (15) aufgenommen und gehalten werden.

11. Befestigungsverfahren für den Sitzsensor für den Fahrzeugsitz (10) nach Anspruch 10, wobei das Haltebauteil (30) in dem konkaven Abschnitt (15) aufgenommen wird, um das Haltebauteil (30) oder die gekrümmte den Anschlussbereich ausbildende Region (21 c) in Kontakt mit einer Bodenfläche des konkaven Abschnitts (15) zu bringen.

## Revendications

1. Capteur d'occupation de siège pour un siège de véhicule (10) comprenant :
un corps principal similaire à un film (21) avec une flexibilité conçu pour être disposé, entre une surface d'un côté d'occupation de siège d'un élément de rembourrage (13) d'une partie de coussin (11) du siège de véhicule (10) partiellement avec une partie concave (15) formée pour être enfoncée et un élément de peau (14) attaché à l'élément de rembourrage (13) pour recouvrir la surface du côté d'occupation de siège, de part et d'autre de la partie concave (15) et comportant une pluralité de sections de détection (21a) pour détecter un passager assis sur l'élément de rembourrage (13) en contact avec la surface du côté d'occupation de siège de l'élément de rembourrage (13), une section de sortie (21b) pour délivrer les signaux détectés par les sections de détection (21a), et une section de continuité (21c) pour transmettre les signaux détectés par les sections de détection (21a) à la section de sortie (21b) ; et
un élément de maintien (30) configuré pour incurver et maintenir une partie de la section de continuité (21c) constituant une région du corps principal similaire à un film (21) et pour pouvoir être reçu avec la région constituant la section de continuité (21c) incurvée dans la partie concave (15) et comportant une paire de parties de paroi se faisant face (32a, 32b) faisant face aux surfaces intérieures de la partie concave (15) et une partie de liaison (30c) reliant les extrémités respectives des parties de paroi se faisant face (32a, 32b) pour recouvrir une surface sur au moins un côté de la région constituant la section de continuité (21c) incurvée par les parties de paroi se faisant face (32a, 32b) et la partie de liaison (30c),
**caractérisé en ce que**
la paire de parties de paroi se faisant face (32a, 32b) et la partie de liaison (30c) sont configurées pour comprendre une paroi de protection intérieure (32) qui incurve et maintient la région constituant la section de continuité (21c) tout en recouvrant la surface du côté d'élément de peau de la région constituant la section de continuité (21c), et une paroi de protection extérieure (33) qui incurve et maintient la région constituant la section de continuité (21c) tout en recouvrant une surface du côté d'élément de rembourrage de la région constituant la section de continuité (21c), et
l'élément de maintien comporte une partie de liaison souple (62, 70) qui relie les parties à une extrémité dans une direction de largeur de la paroi de protection intérieure (32) et de la paroi de protection extérieure (33) et qui permet aux parois de protection intérieure et extérieure (32, 33) de pivoter de manière relative autour de la partie de liaison (30c).

2. Capteur d'occupation de siège pour un siège de véhicule selon la revendication 1, dans lequel la paire de parties de paroi se faisant face (32a, 32b) et la partie de liaison (30c) sont fabriquées de manière à comprendre la paroi de protection intérieure (32) qui incurve et maintient la région constituant la section de continuité (21c) tout en recouvrant une surface du côté d'élément de peau de la région constituant la section de continuité (21c).

3. Capteur d'occupation de siège pour un siège de véhicule selon la revendication 2, dans lequel l'élément de maintien (30) comporte des éléments de fixation (57, 61) qui peuvent être fixés à la paroi de protection intérieure (32) avec au moins une partie de la région constituant la section de continuité (21c) incurvée interposée entre eux.

4. Capteur d'occupation de siège pour un siège de véhicule selon la revendication 3, comprenant en outre des parties de liaison souples (62, 70) qui relient les parties à une extrémité dans une direction de largeur de la paroi de protection intérieure (32) et les éléments de fixation (57, 61) et qui permettent aux éléments de fixation (57, 61) de pivoter autour des parties de liaison (62, 70) par rapport à la paroi de protection intérieure (32).

5. Capteur d'occupation de siège pour un siège de véhicule selon l'une quelconque des revendications précédentes, dans lequel les autres extrémités des parties de paroi se faisant face (32a, 32b) constituant la paroi de protection extérieure (33) sont configurées pour faire saillie au-delà des autres extrémités des parties de paroi se faisant face (32a, 32b) constituant la paroi de protection intérieure (32).

6. Capteur d'occupation de siège pour un siège de véhicule selon l'une quelconque des revendications précédentes, dans lequel au moins les parties de paroi se faisant face (32a, 32b) ou la partie de liaison (30c) sont pourvues, au niveau des parties d'extrémité opposées dans une direction de largeur, de parties de limitation (45, 46) pour limiter le déplacement de la région constituant la section de continuité (21c) dans la direction de largeur.

7. Capteur d'occupation de siège pour un siège de véhicule selon l'une quelconque des revendications précédentes, dans lequel la paroi de protection intérieure (32) et la paroi de protection extérieure (33) sont reliées à une extrémité dans une direction de largeur de celles-ci de manière à maintenir un espace (31) qui permet l'insertion de la région constituant la section de continuité (21c) dans celui-ci, entre la paroi de protection intérieure (32) et la paroi de protection extérieure (33).

8. Capteur d'occupation de siège pour un siège de véhicule selon la revendication 7, dans lequel au moins l'une de la paroi de protection intérieure (32) et de la paroi de protection extérieure (33) est pourvue, à l'autre extrémité dans la direction de largeur, d'une partie de limitation de détachement (43) qui limite le détachement de la région constituant la section de continuité (21c) qui a été insérée dans l'espace (31) de l'autre extrémité.

9. Capteur d'occupation de siège pour un siège de véhicule selon l'une quelconque des revendications précédentes, dans lequel l'élément de maintien (30) est pourvu de parties étendues (32d) qui s'étendent des autres extrémités des parties de paroi se faisant face (32a, 32b) le long de la surface du côté d'occupation de siège de l'élément de rembourrage (13).

10. Procédé de fixation pour un capteur d'occupation de siège pour un siège de véhicule (10) pour attacher un capteur d'occupation de siège (20) pour un siège de véhicule (10) à une partie de coussin du siège de véhicule (10), le capteur d'occupation de siège (20) comprenant :
un corps principal similaire à un film (21) avec une flexibilité conçu pour être disposé, entre une surface d'un côté d'occupation de siège d'un élément de rembourrage (13) d'une partie de coussin (11) du siège de véhicule (10) partiellement avec une partie concave (15) formée pour être enfoncée et un élément de peau (14) attaché à l'élément de rembourrage (13) pour recouvrir la surface du côté d'occupation de siège, de part et d'autre de la partie concave (15) et comportant une pluralité de sections de détection (21a) pour détecter un passager assis sur l'élément de rembourrage (13) en contact avec la surface du côté d'occupation de siège de l'élément de rembourrage (13), une section de sortie (21b) pour délivrer les signaux détectés par les sections de détection (21a), et une section de continuité (21c) pour transmettre les signaux détectés par les sections de détection (21a) à la section de sortie (21b) ; et
un élément de maintien (30) configuré pour incurver et maintenir une partie de la région constituant la section de continuité (21c) du corps principal similaire à un film (21) et pour pouvoir être reçu avec la région constituant la section de continuité (21c) incurvée dans la partie concave (15) et comportant une paire de parties de paroi se faisant face (32a, 32b) faisant face aux surfaces intérieures de la partie concave (15) et une partie de liaison (30c) reliant les extrémités respectives des parties de paroi se faisant face (32a, 32b) pour recouvrir une surface sur au moins un côté de la région constituant la section de continuité (21c) incurvée par les parties de paroi se faisant face (32a, 32b) et la partie de liaison (30c),
**caractérisé en ce que**
une partie formant la partie concave (15) dans l'élément de rembourrage (13) est déformée de manière élastique pour augmenter une distance entre les surfaces intérieures de la partie concave (15), les parties de paroi se faisant face (32a, 32b) de l'élément de maintien (30) ou la région constituant la section de continuité (21c) incurvée du corps principal similaire à un film (21c) est maintenue en contact coulissant avec les surfaces intérieures (15a, 15b), et les parties de paroi se faisant face (32a, 32b) et la partie de liaison (30c) de l'élément de maintien (30) et la région constituant la section de continuité (21c) incurvée sont reçues et maintenues dans la partie concave (15).

11. Procédé de fixation pour le capteur d'occupation de siège pour un siège de véhicule selon la revendication 10, dans lequel l'élément de maintien (30) est reçu dans la partie concave (15) pour amener l'élément de maintien (30) ou la région constituant la section de continuité (21c) incurvée en contact avec une surface de fond de la partie concave (15).
